Europäisches Patentamt

**European Patent Office**

Office européen des brevets

(11) Publication number: **0 311 256**
A1

## EUROPEAN PATENT APPLICATION

(21) Application number: 88308246.3

(51) Int. Cl.4: **B05C 17/00 , B05C 5/04**

(22) Date of filing: 07.09.88

(30) Priority: 03.10.87 GB 8723252

(43) Date of publication of application:
**12.04.89 Bulletin 89/15**

(84) Designated Contracting States:
**DE FR GB**

(71) Applicant: **BOSTIK LIMITED**
**Ulverscroft Works Ulverscroft Road**
**Leicester LE4 6BW(GB)**

(84) **GB**

(71) Applicant: **EMHART S.A.**
**12 rue Truillot**
**F-94203 Ivry-sur-Seine Cédex(FR)**

(84) **FR**

(71) Applicant: **BOSTIK-TUCKER GmbH**
**Gattenhöferweg 36**
**D-6370 Oberursel/Taunus(DE)**

(84) **DE**

(72) Inventor: **Wooge, Christian**
**Hamelstrasse 10**
**D-6380 Bad Homburg(DE)**

(74) Representative: **Wetters, Basil David Peter et al**
**Emhart Patents Department Lyn House 39**
**The Parade**
**Oadby, Leicester LE2 5BB(GB)**

(54) **Applicators for hot-melt materials.**

(57) A glue-gun provided with baffle means (19) in the melt chamber (12) whereby material passing down the middle of the melt chamber (12) is deflected from the outlet on to the heating surfaces (17) of the melt chamber (12) before passing through the outlet (16).

The arrangement is particularly suitable for use in a cartridge-loaded glue-gun in which hot-melt adhesive material is supplied in a cartridge (11) of heat-conducting material. It is thus especially useful with materials cured by contact with air and/or moisture.

Fig. 2

# APPLICATORS FOR HOT-MELT MATERIALS

This invention relates to applicators for hot-melt materials of the kind often known as hot-melt guns.

Various proposals have been made to provide apparatus for melting and dispensing solid thermoplastic material, often supplied in the form of a rod. Such applicators are usually provided with a melt body having a melt chamber in which thermoplastic material may be melted, an inlet to the melt chamber and an outlet comprising an orifice for dispensing and applying melted material, means for feeding solid thermoplastic material through the inlet into the melt chamber and means for heating the melt body so that thermoplastic material is melted in the melt chamber before it is expelled through the outlet and can thus be dispensed and applied in molten condition from the orifice. Such applicators find use in various fields of application, commonly in the form of applicators for hot-melt adhesives and sealants and especially in hot-melt glue-guns having provision for feeding adhesive, often in the form of a rod known as a glue-stick, to the melt body, for example by trigger-operated means.

The present invention is concerned with hot-melt applicators for melting thermoplastic material and dispensing and applying the resulting hot-melt materials, and more particularly is concerned with hand-held glue-guns.

Molten material is expelled from the outlet of such guns when it is displaced from the melt chamber by solid thermoplastic material fed through the inlet. Usually the operation of such a glue-gun is controlled by the feed of solid material into the melt chamber. Generally the heating surface through which heat is supplied to the melt chamber form the external walls of the melt chamber and the outlet is centrally located. Alternatively, the heating surface may form the end face of the melt chamber, surrounding the outlet. In some conditions, for example during start-up, it is possible for unmelted material to reach the outlet where it can block or otherwise interfere with the correct operation of the outlet.

It is an object of the present invention to provide a hot-melt applicator in which this condition is substantially obviated.

According to the present invention, we provide a hot-melt applicator having a melt body including a melt-chamber in which thermoplastic material may be melted, an inlet to the melt chamber and an outlet comprising an orifice for dispensing and applying melted material, means for feeding solid thermoplastic material through the inlet into the melt chamber and means for heating the melt body so that thermoplastic material is melted in the melt chamber before it is expelled through the outlet and can then be dispensed and applied in molten condition from the orifice, characteriased in that the outlet of the melt chamber is provided with baffle means, preferably of heat-conducting material, whereby thermoplastic material fed down the middle of the melt chamber is deflected to contact the heated surface of the melt chamber before passing through the outlet.

Preferably a mixing space is provided on the downstream side of the baffle means so that heat from the molten material passes from the mixing space to the upstream face of the baffle means. The thus-heated baffle means serves to soften non-melted thermoplastic material deflected from the outlet to the heating surface of the melt chamber.

Although the present invention may be applied to a glue-gun fed by rods of thermoplastic material such as hot-melt adhesives known as glue-sticks, it is particularly useful in a glue-gun fed by a cartridge filled with the thermoplastic material. Such cartridges, usually made of heat-conducting material, are particularly useful when using adhesives and sealants which are cured by contact with air and/or moisture.

The baffle means may take the form of a disc fitted over the outlet of the melt-chamber and provided with outlet means adjacent the heating surface of the melt-chamber.

When used in a cartridge-fed glue-gun, the baffle means may be located within the cartridge. In such an arrangement, the cartridge itself effectively constitutes the melt chamber.

In order that the invention be better understood, a preferred embodiment of the invention will now be described in greater detail with reference to the accompanying drawing in which:

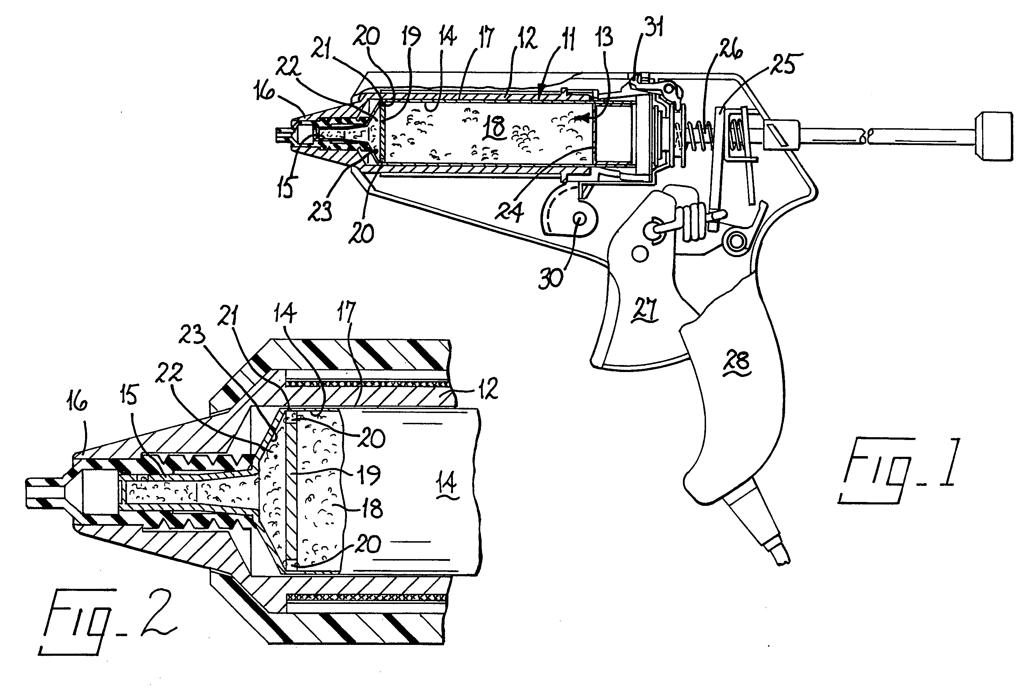

Figure 1 is a schematic section of a cartridge-loaded glue-gun according to the present invention, and

Figure 2 is a part-section, on a larger scale, of the melt body and outlet of the glue-gun illustrated in Figure 1.

In the drawing, cartridge 11 is inserted in melt body 12 through inlet 13. Cartridge 11 has an aluminium cylinder body portion 14, which constitutes the melt chamber of the glue-gun, and a nozzle member 15 at one end which projects through outlet 16 of melt body 12. Heating surface 17 forming the external walls of melt body 12 contact the walls of body portion (melt chamber) 14 and in operation heating surfaces 17 supply heat through the walls of body portion 14 and melt thermoplastic material 18 which is loaded in cartridge 11.

The nozzle member 15 is separated from body portion 14 of the cartridge 11 by disc 19 which is provided with outlet slots 20 adjacent wall 21 of body portion 14 which are in contact with heating surfaces 17. Mixing space 22 lies between the down-stream face of disc 19 and nozzle member 15. Molten material deflected by disc 19 passes through slots 20 and is mixed in mixing space 22 following deflection by slanting walls 23 of nozzle member 15. Heat passes from mixing space 22 through disc 19 and is thus transferred from the upstream face of disc 19 to assist in the softening and melting of thermoplastic material deflected by disc 19 towards heating surfaces 17.

Cartridge 11 fits into melt body 12 of the glue-gun; in order to permit loading of the cartridge, the melt body 12 is mounted on handle 28 by pivot 30 and is retained in a closed position by catches 31. The cartridge 11 is inserted into melt body 12 when in the open position, and after returning to the closed position, piston rod 26 is pushed in through toggle drive 25 until piston head 24 contacts thermoplastic material 18 in body 14 of the cartridge. Piston-head 24 is located in body portion 14 of the cartridge and is controlled by toggle drive 25 acting in known manner on piston rod 26 when actuated by trigger 27 located in handle 28 of the glue-gun. The catches 31 are interlocked with piston rod 26 in such a manner that the glue-gun can only be opened to insert or remove a cartridge when the piston rod 26 is withdrawn to its full limit. Piston head 24 is located in body portion 14 of the cartridge and acts as a seal to prevent ingress of air and moisture and contact with thermoplastic material 18. The structure and operation of this cartridge-loaded glue-gun is described in greater detail in our copending UK patent application 87 23 181.

When the glue-gun is not in use, nozzle 15 is sealed against ingress of air and moisture by a cap (not shown).

## Claims

1. Hot-melt applicator having a melt body including a melt-chamber (12) in which thermoplastic material may be melted, an inlet (13) to the melt chamber (12) and an outlet (16) comprising an orifice for dispensing and applying melted material, means (25,26,27) for feeding solid thermoplastic material through the inlet into the melt chamber (12) and means (17) for heating the melt body so that thermoplastic material is melted in the melt chamber (12) before it is expelled through the outlet (16) and can then be dispensed and applied in molten condition from the orifice (15), characterised in that the outlet (16) of the melt chamber is provided with baffle means (19), preferably of heat-conducting material, whereby thermoplastic material fed down the middle of the melt chamber (12) is deflected to contact the heated surface (17) of the melt chamber before passing through the outlet (16).

2. A hot-melt applicator according to claim 1 wherein a mixing space (22) is provided on the downstream side of the baffle means (19) so that heat from the molten material passes from the mixing space (22) to the upstream face of the baffle means (19).

3. A hot-melt applicator according to claim 1 or 2 wherein the baffle means (19) takes the form of a disc fitted over the outlet (16) of the melt chamber (12) and is provided with outlet means (20) adjacent the heating surface (17) of the melt-chamber.

4. A hot-melt applicator according to any one of claims 1, 2 or 3, wherein the solid thermoplastic material is supplied to the applicator in the form of a rod or a stick.

5. A hot-melt applicator according to any one of claims 1, 2 or 3, wherein the solid thermoplastic material is supplied to the applicator in a cartridge (11), made of heat-conducting material.

6. A hot-melt applicator according to claim 5 wherein the baffle means (19) is incorporated in the cartridge (11).

7. A hot-melt applicator according to claim 5 or 6 wherein the thermoplastic material is expelled from the cartridge (11) by pressure from a piston-head (24) operated by a toggle-drive mechanism (25) acting on a piston rod (26).

8. A hot-melt applicator according to claim 7 wherein the cartridge (11) is loaded by an arrangement which is interlinked so that the applicator can only be opened to insert or remove a cartridge when the piston rod (26) is withdrawn to its full limit.

20 19 14 17 12 11 13 31 26 25

21

22

16

15

23

20

18

24

30

27

28

EP 0 311 256 A1

Fig_1

23 21 14 17

22

16 15

12

20

19

14

18

20

Fig_2

European Patent Office

**EUROPEAN SEARCH REPORT**

| | DOCUMENTS CONSIDERED TO BE RELEVANT | | EP 88308246.3 |

| Category | Citation of document with indication, where appropriate, of relevant passages | Relevant to claim | CLASSIFICATION OF THE APPLICATION (Int. Cl.4) |
|---|---|---|---|
| X | US - A - 3 298 572 (NEWTON)<br>* Fig. 1 *<br>-- | 1 | B 05 C 17/00<br>B 05 C 5/04 |
| A | EP - A2 - 0 061 040 (KARL M. REICH, MASCHINENFABRIK GMBH)<br>* Abstract *<br>-- | 1 | |
| A | DE - A1 - 2 752 525 (TRW INC.)<br>* Claims *<br>-- | 1 | |
| A | DE - A1 - 2 832 805 (HILTI AG)<br>* Claims *<br>---- | 1 | |

| | TECHNICAL FIELDS SEARCHED (Int. Cl.4) |
|---|---|
| | B 05 C |

The present search report has been drawn up for all claims

| Place of search | Date of completion of the search | Examiner |
|---|---|---|
| VIENNA | 04-01-1989 | SCHÜTZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82